(19) Europäisches Patentamt / European Patent Office / Office européen des brevets

(11) **EP 1 847 422 A1**

(12) **DEMANDE DE BREVET EUROPEEN**

(43) Date de publication:
**24.10.2007 Bulletin 2007/43**

(51) Int Cl.:
*B60R 21/34* (2006.01)  *F02M 35/16* (2006.01)

(21) Numéro de dépôt: **07104687.4**

(22) Date de dépôt: **22.03.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **07.04.2006 FR 0651254**

(71) Demandeur: **Peugeot Citroen Automobiles SA 78943 Vélizy-Villacoublay Cedex (FR)**

(72) Inventeurs:
• **Hillairet, Blandine 92150, Suresnes (FR)**
• **Janssen, Benjamin 95170, Deuil la barre (FR)**

(74) Mandataire: **Ménès, Catherine Peugeot Citroen Automobiles SA PI (LG081), 18 rue des Fauvelles 92250 La Garenne-Colombes (FR)**

(54) **Raccord destiné a être monté entre un capot de véhicule automobile et un élément rigide sous capot**

(57) L'invention a pour objet une conception de raccord telle que celui-ci participe à l'absorption du choc de par sa déformation. Conformément à un premier mode de réalisation de l'invention, ceci est obtenu par un raccord (11) pouvant être disposé entre une culasse (7) (ou plus exactement au dessus du couvre culasse) et un capot et constitué par un tube dont les tangentes suivent une courbe gauche. L'invention permet de disposer un élément rigide, comme un raccord, très près d'un capot, tout en minimisant les risques de blessure à la tête (6) lors d'un choc piéton.

FIG.6

EP 1 847 422 A1

**Description**

La présente invention concerne un raccord, notamment un raccord d'air faisant partie du circuit d'admission d'air frais au moteur, destiné à être monté sous un capot de véhicule automobile et au-dessus d'un élément rigide sous capot comme par exemple la culasse du moteur.

Pour minimiser l'impact d'un choc entre un piéton et un véhicule, notamment pour réduire les risques de lésions à la tête, l'architecture du véhicule doit être conçue d'une manière telle que la tête ne heurte pas à grande vitesse une pièce rigide comme par exemple le bloc moteur. Ceci se traduit notamment par des normes législatives connues sous l'acronyme HIC (selon l'appellation anglo-saxonne Head Injury Criterion signifiant « critère de lésion de la tête »), qui impose qu'une grande partie de l'énergie de l'impact soit absorbée avant que le capot ne vienne en contact avec l'élément rigide au niveau de la tête du piéton accidenté.

Ce critère est le plus souvent satisfait en concevant des capots ni trop souples (les enfoncements seraient alors trop importants), ni trop raides (la tête subirait alors une décélération trop rapide pouvant elle-même être fatale au piéton), et en considérant la zone sous le capot (ou plus exactement sous la doublure si on considère qu'un capot est typiquement formé d'une peau externe et d'une doublure interne) comme une zone d'exclusion à l'intérieur de laquelle on ne doit disposer aucun élément rigide.

Les normes législatives étant naturellement de plus en plus sévères dans un souci de réduction de la dangerosité des véhicules, la tendance est à une augmentation de plus en plus grande de cette zone d'exclusion. Or, l'espace sous capot est à l'évidence relativement réduit, surtout sur les véhicules compacts, et pour de multiples raisons, il n'est pas nécessairement souhaitable de rehausser la hauteur du capot.

Parmi les composants qui doivent être logés le plus souvent entre le bloc moteur et le capot figurent notamment les conduites d'admission en air frais. Ces conduites sont typiquement réalisées en matière plastique dure et constituent donc des zones de rigidité importantes qui normalement doivent être placées en dehors de la zone d'exclusion.

Dans certains cas, il est possible de concilier l'implantation de la conduite et les critères de sécurité en optimisant sa compacité par exemple en diminuant, au moins localement, la taille de la conduite. A l'évidence, cette solution a ses limites si on ne veut pas dégrader les performances du moteur.

C'est pourquoi les auteurs de la présente invention se sont donnés pour but une nouvelle conception de raccord permettant son implantation au moins partiellement dans la zone d'exclusion sans pour autant compromettre ni les performances de sécurité ni les performances du moteur.

Selon l'invention, ce but est atteint par une conception de raccord telle que celui-ci participe à l'absorption du choc de par sa déformation. Conformément à un premier mode de réalisation de l'invention, ceci est obtenu par un raccord pouvant être disposé entre une culasse (ou plus exactement au dessus du couvre culasse) et un capot et constitué par un tube dont les tangentes suivent une courbe gauche.

Le raccord selon l'invention présente une forme gauche, rappelant par exemple la forme d'un ressort ou d'un escalier en colimaçon, de sorte que lorsqu'une pression est exercée au niveau de la zone du raccord la plus proche du capot, le raccord va se déformer non seulement selon un plan vertical mais également latéralement en vrillant.

Selon une variante de l'invention plus particulièrement préférée, le raccord présente un extremum au niveau de sa zone la plus proche du capot. Dans cette variante, il ne s'agit donc pas d'épouser la forme de la culasse pour ne pas s'en éloigner mais au contraire de créer un certain vide entre le raccord et la culasse.

Dans ces conditions, il devient non seulement possible, mais éventuellement souhaitable de disposer le raccord relativement près du capot, jusqu'à une distance de 30mm environ, dans la direction de l'impact (traditionnellement 50° par rapport à l'horizontale) tout en respectant les normes de sécurité associées au choc piéton.

D'autres détails et caractéristiques avantageuses de l'invention ressortent de la description de différents modes de réalisation de l'invention, faite ci-après en référence aux dessins annexés dans lesquels :

La figure 1 est une vue en coupe d'un raccord air disposé au dessus du couvre culasse moteur (élément rigide), mais à une distance suffisante du capot pour respecter la zone d'exclusion. Cette configuration correspond à la solution de l'état de l'art proposée pour satisfaire le critère choc piéton ;

Les figures 2 à 4 illustrent trois géométries de raccord proposées selon l'invention, vue de côté ; et,

Les figures 5 à 7 illustrent une quatrième variante de l'invention, plus spécialement préféré, respectivement selon une vue arrière, de dessus et de côté.

Il peut être rappelé que selon le projet de directive 2010 (qui est encore en discussion), le critère choc piéton est considéré comme satisfait si :

- d'une part, dans une zone appelée « zone tête enfant », une tête de 3,5 kg heurtant le capot à une vitesse d'impact de 40 km/h selon une direction de 50° par rapport à l'horizontale, donne un HIC (Head Injury Criterion) inférieur à 1250 sur minimum ¾ de la zone de test et inférieur à 2000 sur maximum ¼ de la zone de test

- et d'autre part, dans une zone appelée « zone tête adulte », une tête de 4,5 kg heurtant le capot à une vitesse d'impact de 40 km/h selon une direction de 65° par rapport à l'horizontale, donne un HIC inférieur à 1250 sur minimum3/4de la zone de test et inférieur à 2000 sur maximum ¼ de la zone de test

A partir du moment où la tête heurte le capot, elle subit une décélération (accélération négative pour laquelle on ne garde que la valeur absolue pour les calculs, c'est pourquoi elle est représentée en accélération positive). Cette décélération est plus ou moins importante selon la raideur de ce que la tête rencontre à chaque instant (capot initial, capot après un premier enfoncement et donc déjà déformé, action ou non de la doublure, contact ou non avec des éléments sous capot...). Ces changements de décélérations se traduisent par une courbe γ=f(t) sur laquelle est calculé le HIC (sur une fenêtre de temps glissante de maximum 15ms) et selon la formule suivante :

$$HIC = Max\left\{ \ (t_2 - t_1).\left( \frac{1}{t_2 - t_1}.\int_{t1}^{t2} \gamma(t)dt \right)^{2,5} \right\} \text{ avec } t_2\text{-}t_1 \leq 15ms \ ).$$

Dans ces conditions, pour minimiser la dangerosité d'un choc piéton, il est intéressant de faire en sorte que le niveau d'accélération soit aussi faible que possible au moment du contact avec le point dur, autrement dit permettre au maximum l'amortissement du choc via la déformation du capot et de sa doublure. Ceci est obtenu en éloignant autant que faire tous les points durs du capot. Pour autant, il est clair que ceci conduit à des compromis au niveau du style du véhicule qui ne sont pas toujours souhaités.

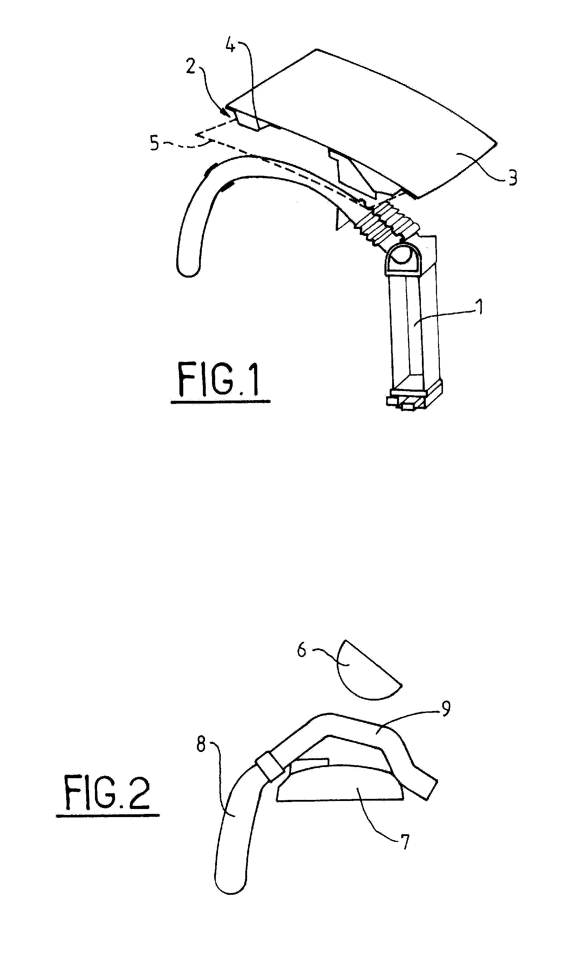

La figure 1 est une illustration de la problématique de l'invention. Selon une architecture moteur désirée, un raccord d'air destiné à amener l'air depuis un radiateur 1 vers l'entrée d'un bloc moteur ici non représenté, doit enjamber une partie de la culasse, et être implanté entre le couvre culasse et le capot 2 comportant une peau externe 3 et une doublure 4. Un tel raccord est de façon conventionnelle constitué par un tube courbé, dont le diamètre est de l'ordre de 4 à 5 cm (cette valeur étant donnée à titre purement exemplatif). La pression intérieure est relativement importante de sorte que ce raccord est normalement réalisé dans une matière plastique dure, par exemple en PVA chargé fibres de verre, qui doit être capable de présenter une tenue en pression suffisante.

Selon les techniques conventionnelles, ce raccord est courbé selon une seule direction, autrement dit, suit une courbe plane. Pour réduire les conséquences d'un choc piéton, il est recommandé de prévoir une zone d'exclusion, délimitée d'une part par la doublure du capot et d'autre part par une surface fictive 5, représentée par des traits pointillés et souvent dénommée capot technique, écartée du capot d'une distance minimum de par exemple 80 mm. Aucun composant rigide ne doit être implanté dans cette zone d'exclusion.

Pour respecter cet impératif, il a déjà été proposé d'amincir le raccord dans sa zone la plus proche du capot en formant par exemple un méplat comme illustré sur la figure 1.

Clairement, cette technique n'est possible que si le raccord n'empiète que très légèrement dans la zone d'exclusion, faute de quoi le raccord n'est plus fonctionnel - ou du moins incompatible avec les performances moteur souhaitées.

Aussi, pour ne pas compromettre ces performances, les inventeurs proposent de modifier la forme du raccord de façon à lui donner une capacité à se déformer suffisamment importante pour que le raccord participe à la dissipation de l'énergie du choc piéton, au même titre que le capot, et de ce fait, puisse au moins pour partie empiéter dans la zone d'exclusion. Dans ces conditions, le raccord peut être d'un diamètre constant.

Il peut être noté que dans l'exemple ici considéré, l'élément rigide au dessus duquel le raccord doit être implanté est une culasse (ou plus exactement un couvre culasse, ce dernier étant lui-même le plus souvent rigide) mais il va de soi que l'invention n'est pas limitée à une telle implantation, la seule limitation étant que l'élément rigide considéré ne soit pas trop près de la périphérie du capot (par exemple au niveau des trois quarts de la partie centrale.

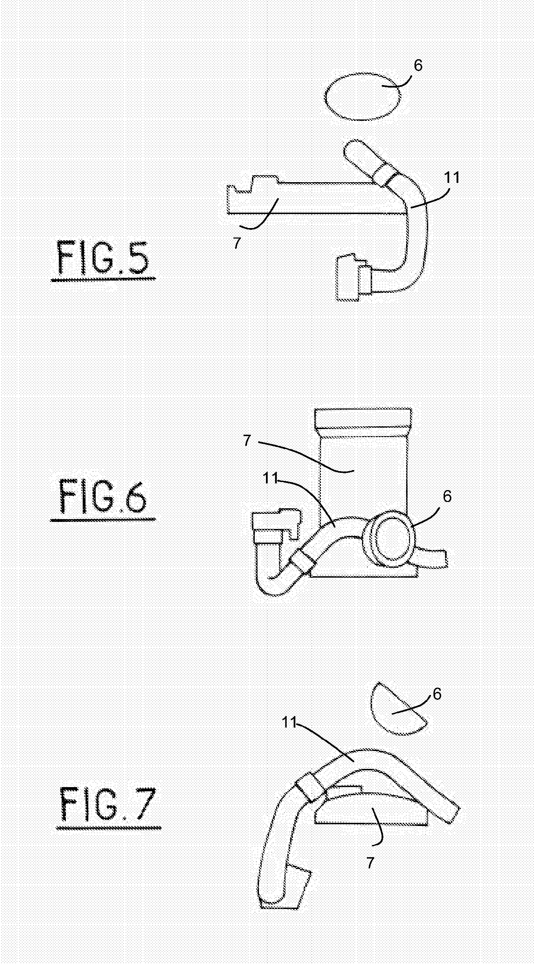

Les figures 2, 3, 4 illustrent 3 modes différents de réalisation, les figures 5, 6 et 7 illustrant pour leur part un quatrième mode de réalisation, avec des vues d'arrière, de dessus et de côté.

Les figures 2 à 4 sont toutes des vues de côté dans lesquelles on a représenté en 6 une masse hémisphérique simulant une tête, un couvre culasse 7 et un raccord 8. Sur ces figures, le capot et la doublure ne sont pas représentés mais le lecteur comprendra que celui-ci est bien sûr interposé entre la masse représentant une tête et le raccord.

Dans toutes les variantes proposées, le raccord n'est plus inscrit dans un plan mais est gauche, présentant ainsi une conception géométrique telle que le comportement global à l'enfoncement est bon. Autrement dit, même si le raccord est dans un matériau rigide comme indiqué précédemment, il va pouvoir se déformer à la manière un peu d'un ressort de suspension, et cette déformation va elle-même contribuer à minimiser l'effet d'un choc piéton.

Dans la variante de la figure 2, le raccord comporte une partie 9 essentiellement droite, parallèle au capot. Cette portion droite 9 est la plus éloignée du cache culasse.

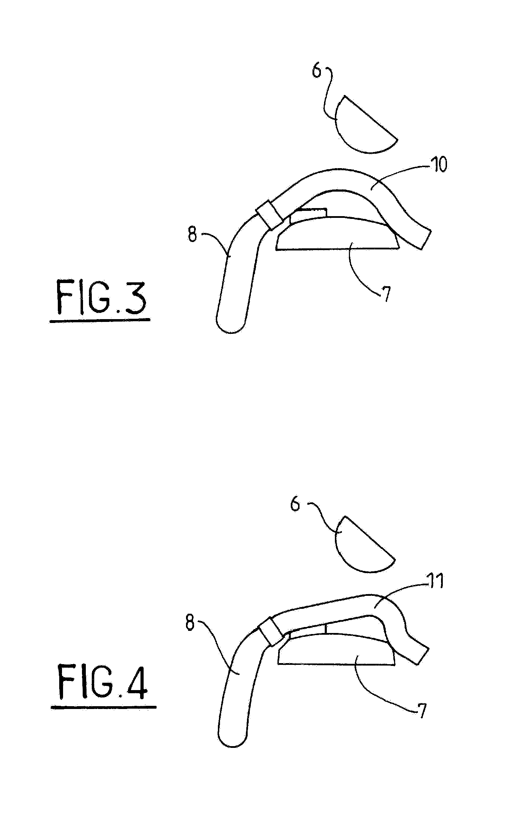

Dans la variante de la figure 3, la zone du raccord 10 la plus proche du capot (et donc la plus susceptible d'être indirectement en contact avec la tête du piéton) présente un léger rayon de courbure.

Dans la variante illustrée figure 4, cette zone la plus proche du capot, indiquée en 11 présente une courbure très prononcée. Dans les trois cas, la géométrie du raccord est telle qu'il va a priori fléchir d'avant en arrière au cours de l'impact.

Dans une variante tout particulièrement préférée, le raccord est placé proche du capot (notamment à une distance inférieure à 40 mm, par exemple de l'ordre de 30 mm, soit près du tiers seulement de la distance normalement préconisée). Dans ces conditions, loin de constituer le point dur, le raccord participe maintenant à l'amortissement de l'accélération de la tête au même titre que le capot.

A noter que pour autant, ce phénomène n'est possible que si, vu de dessus, ou plus exactement dans la région du raccord la plus proche du capot, le raccord n'occupe qu'une petite partie de la surface du capot (de préférence moins de 10%, de préférence encore moins de 5%) et s'il est positionné dans les 2/3 centraux du capot.

La géométrie de raccord illustrée aux figures 5 à 7 est tout particulièrement préférée et peut être qualifiée de géométrie en S, autrement dit une géométrie permettant une déformation en vrille.

Le fait d'autoriser le dépassement du capot technique par certains organes (et donc une proximité entre le capot et certains organes, sous certaines conditions) permet de libérer certaines contraintes fortes d'implantation « subies » par les motoristes ou les personnes d'adaptation moteur (admission notamment).

Dans l'exemple de l'invention (raccord d'air d'une ligne en pression), cela permet également d'autoriser de nouveau des diamètres de raccords, permettant d'augmenter les performances moteur qui auraient été limitées voire réduites dans le cas où les organes sous capot devraient impérativement être sous le capot technique.

Avantageusement, avec les raccords selon l'invention, et plus particulièrement lorsqu'ils sont placés délibérément à une faible distante du capot, le raccord participe à l'absorption d'un choc tête piéton si la tête est lancée dans une zone où le capot se déforme jusqu'à toucher le raccord d'air.

L'invention permet ainsi de préserver de bonnes performances au choc piéton tout en minimisant les contraintes d'implantation en z pour les concepteurs de composants et une amélioration des performances du moteur par la limitation des contraintes sur l'implantation et le diamètre des raccords d'air.

## Revendications

1. Raccord (9, 10, 11) destiné à être implanté au moins pour partie entre un élément rigide (7) et un capot (3) d'un véhicule automobile, **caractérisé en ce qu'**il est constitué par un tube dont les tangentes suivent une courbe gauche.

2. Raccord selon la revendication 1, **caractérisé en ce que** la région (9) du raccord la plus proche du capot (3) est parallèle au capot (3).

3. Raccord selon la revendication 1, **caractérisé en ce que** la région du raccord (9, 10, 11) la plus proche du capot occupe au plus 10% de la surface du capot (3) dans une projection sur un plan incliné à 40 ° par rapport à l'horizontale.

4. Raccord selon l'une des revendications précédentes, **caractérisé en ce que** le raccord (9, 10, 11) est conçu d'une manière telle qu'un impact au niveau de la région du raccord la plus proche du capot (3) conduit à une déformation en vrille.

5. Raccord selon l'une quelconque des revendications précédentes **caractérisé en ce que** son diamètre est constant.

6. Raccord selon l'une quelconque des revendications précédentes, **caractérisé en ce que** la distance minimale entre le raccord (9, 10, 11) et le capot (3) est inférieure à 40 mm.

7. Raccord selon l'une quelconque des revendications précédentes **caractérisé par le fait qu'**il participe à l'absorption d'un choc tête piéton si la tête (6) est lancée dans une zone où le capot (3) se déforme jusqu'à toucher le raccord d'air.

8. Raccord selon l'une quelconque des revendications précédentes, **caractérisé en ce que** ledit élément rigide (7) est la culasse ou le cache culasse du moteur du véhicule.

FIG.1

FIG.2

FIG.3

FIG.4

FIG.5

6

11

7

FIG.6

7

11

6

FIG.7

6

11

7

Office européen
des brevets

**RAPPORT DE RECHERCHE EUROPEENNE**

Numéro de la demande

EP 07 10 4687

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DE 100 63 778 A1 (OPEL ADAM AG [DE]) 12 septembre 2002 (2002-09-12) * abrégé * ----- | 1 | INV. B60R21/34 F02M35/16 |
| A | JP 2004 098811 A (TOYODA SPINNING & WEAVING) 2 avril 2004 (2004-04-02) * abrégé * ----- | 1 | |
| A | JP 2004 124757 A (INOUE MTP KK) 22 avril 2004 (2004-04-22) * abrégé * ----- | 1 | |
| A | JP 2004 308453 A (INOUE MTP KK) 4 novembre 2004 (2004-11-04) * abrégé * ----- | 1 | |
| A | EP 1 426 237 A (MANN & HUMMEL GMBH [DE]) 9 juin 2004 (2004-06-09) * abrégé; figure 3 * ----- | 1 | |
| A | EP 0 732 495 A1 (TOYOTA MOTOR CO LTD [JP]) 18 septembre 1996 (1996-09-18) * abrégé; figure 2 * ----- | 1 | DOMAINES TECHNIQUES RECHERCHES (IPC) B60R F02M |

Le présent rapport a été établi pour toutes les revendications

| Lieu de la recherche | Date d'achèvement de la recherche | Examinateur |
|---|---|---|
| Munich | 28 juin 2007 | Eriksson, Jonas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 10 4687

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-06-2007

| Document brevet cité au rapport de recherche | | | Date de publication | Membre(s) de la famille de brevet(s) | | Date de publication |
|---|---|---|---|---|---|---|
| DE | 10063778 | A1 | 12-09-2002 | AUCUN | | |
| JP | 2004098811 | A | 02-04-2004 | AUCUN | | |
| JP | 2004124757 | A | 22-04-2004 | AUCUN | | |
| JP | 2004308453 | A | 04-11-2004 | AUCUN | | |
| EP | 1426237 | A | 09-06-2004 | DE | 10257072 A1 | 24-06-2004 |
| EP | 0732495 | A1 | 18-09-1996 | DE | 69606078 D1 | 17-02-2000 |
| | | | | DE | 69606078 T2 | 06-07-2000 |
| | | | | JP | 2699915 B2 | 19-01-1998 |
| | | | | JP | 8246968 A | 24-09-1996 |
| | | | | US | 5630387 A | 20-05-1997 |

EPO FORM P0460

Pour tout renseignement concernant cette annexe : voir Journal Officiel de l'Office européen des brevets, No.12/82